# EUROPEAN PATENT SPECIFICATION

(11) **EP 2 672 779 B1**
(45) Date of publication and mention of the grant of the patent: **06.11.2019**
(21) Application number: 12305660.8
(22) Date of filing: 08.06.2012
(51) Int. Cl.: H04W 76/19, H04W 76/25

(54) **Avoiding call drop**
Vermeidung des Anrufabbruchs
Évitement d'interruption d'appel

(43) Date of publication of application: 11.12.2013
(73) Proprietor: Alcatel Lucent, 91620 Nozay (FR); INRIA - Institut National de Recherche en Informatique et en Automatique, 78153 Le Chesnay Cedex (FR)
(72) Inventor: Altman, Eitan, 84140 Montfavet (FR); Capdevielle, Véronique, 91620 Nozay (FR)
(74) Representative: Novagraaf Technologies

(56) References cited:
- WO-A1-01/33891
- US-A1- 2003 037 146
- US-B1- 7 076 245

## Description

The technical domain is the domain of cellular communication networks. More particularly it addresses the problem of avoiding unnecessary call drop.

A cellular network covers a geographical area by parting it into cells. Each cell comprises at least one base station managing the wireless communication with mobile terminals located in said cell. A mobile terminal, handling an on-going call, while moving across a cellular network from cell to cell, is successively attached, one at a time, to several base stations. Since at least one base station manages wireless communications for a cell, these two words, base station and cell, may be indifferently used one for the other in the following.

A call risks to be dropped, that is, unwillingly ended before it reaches its normal end, because of a lack of resources in the cellular communication network. This may be due to at least two scenarios.

In a first scenario, a mobile terminal handling an on-going call, reaches/crosses an uncovered area while moving. An uncovered area can be an area where no base station is installed or an area where radio signals cannot propagate, such as e.g. a tunnel.

In such uncovered area a mobile terminal is unable to maintain/establish a wireless communication with any cell to support said on-going call. The farther the mobile terminal is going from the last hosting cell, the worse the quality of said wireless communication becomes, that is the lower e.g. the wireless power received from the last hosting cell becomes. Accordingly, in a prior art cellular communication system, when said quality goes under a given threshold, the mobile terminal drops said on-going call.

In a second scenario, a mobile terminal handling an on-going call, while moving, changes its attachment from a cell to another. This is known as a handover. A handover is a known sequence of messages and actions between a source cell, or initially hosting cell, to which a mobile terminal and said on-going call are attached at the beginning of the handover, and a target cell, or finally hosting cell, to which said mobile terminal and said on-going call are attached at the end of a successful handover. But a successful handover is never guaranteed. A target cell may not be able to accept a handover, e.g. if it lacks enough traffic resources to handle said incoming on-going call. In such a case, in a prior art cellular communication system, a target cell declines the proposed handover and rejects said incoming call. If no other possible target cell is available in the vicinity of the mobile terminal that is able to accept the handover, the mobile terminal and the on-going call remain attached to the source cell.

A handover is typically initiated when the quality of the wireless communication between the mobile terminal and the source cell starts to decrease. In case no target cell can be found to host said on-going call, a further decrease of said quality may be expected leading to said quality going under a given threshold, where, in a prior art cellular communication system, as in the first scenario, the mobile terminal drops said on-going call.

US2003/0037146 provides an example of a resource shortage wherein a communications session is placed on hold, while the session state is maintained, until further resources become available within a cell.

However, even in these two or other scenarios, a call drop is not the best solution expected for a good user experience. A call drop means service interruption, most often loss of information, and a rather long time to later reconnect by means of a new call. An alternative to a call drop may then be useful.

An idea underlying the present application is to allow for a temporary interruption in the service offered by a call, instead of a call drop, especially in cases where availability of enough traffic resources to carry on the call may soon be expected, as disclosed in independent claims 1, 5 and 9. Further embodiments are disclosed in the dependent claims.

One aspect is a mobile terminal, in a cellular communication network, comprising a freezing means able, when an on-going call is about to be dropped, to put said on-going call in frozen mode: freezing said on-going call by suspending the data traffic of said on-going call, instead of having said on-going call dropped.

According to another feature, an "about to be dropped" condition is determined by a quality of the wireless communication going under a given threshold.

According to another feature, an "about to be dropped" condition is determined by a predictive estimation of the location of the mobile terminal.

According to another feature, said mobile terminal further comprises an scanning means able, when a call is in frozen mode, to scan for a target hosting cell able to accept said frozen call either in normal mode or in silent mode.

According to another feature, said mobile terminal further comprises a resuming means able, when a target hosting cell has been found that is able to accept said call in normal mode, to resume the call from frozen mode into normal mode.

Another aspect is a cell, in a cellular communication network, comprising an admission means able, when an incoming call requests to be hosted, to make a decision by selecting among:
- accepting said incoming call in normal mode: servicing all signalling and data aspects of said incoming call, when said cell has enough data traffic resources to handle said incoming call,
- rejecting said incoming call, when said cell has not enough data traffic resources to handle said incoming call, or
- accepting said incoming call in silent mode: servicing all signalling aspects of said incoming call while suspending data traffic of said incoming call, when said cell has not enough data traffic resources to handle said incoming call.

According to another feature, a decision between rejecting said incoming call or accepting said incoming call in silent mode is made upon indicators among:
for said cell:
   - signalling traffic resources availability,
   - expected time until enough data traffic resources are available,
for each neighbour cell of said cell:
   - signalling traffic resources availability,
   - expected time until enough data traffic resources are available,
   - likelihood to accept an incoming call,
and/or:
   - estimated time, for the mobile terminal handling said incoming call, to cross said cell.

According to another feature, said decision is made upon the following tests: if enough signalling traffic resources are available at said cell, and enough data and signalling traffic resources are available at at least one neighbour cell of said cell, or if enough signalling traffic resources are available at said cell, and not enough data traffic resources are available at any neighbour cell of said cell and said expected time until enough data traffic resources are available at at least one neighbour cell of said cell is lesser than said estimated time, for the mobile terminal handling said incoming call, to cross said cell, and enough signalling traffic resources are available at said at least one neighbour cell of said cell, said incoming call is accepted in silent mode by said cell, else said incoming call is rejected.

According to another feature, said decision is made upon a comparison between a probability to find a target hosting cell able to accept said incoming call in normal mode as a function of estimated time, for the mobile terminal handling said incoming call, to cross current cell, and a given threshold.

Another aspect is a method, in a cellular communication network for avoiding a call drop, comprising the following step: when an on-going call is about to be dropped, putting said on-going call in frozen mode, where said on-going call is frozen by having its data traffic suspended, instead of being dropped.

According to another feature, an "about to be dropped" condition is determined by a quality of the wireless communication going under a given threshold.

According to another feature, an "about to be dropped" condition is determined by a predictive estimation of the location of the mobile terminal.

According to another feature, said method further comprises the steps of: once an on-going call has been put in frozen mode, scanning for a target hosting cell able to accept said frozen call either in normal mode or in silent mode.

According to another feature, said method further comprises the steps of: accepting said call in normal mode, if said target hosting cell has enough data traffic resources to handle said incoming call, and resuming said call from frozen mode into normal mode.

According to another feature, said method further comprises the steps of: accepting said call in silent mode, if said target hosting cell has not enough data traffic resources but has enough signalling traffic resources to handle said incoming call, keeping said call into frozen mode, and carrying on scanning for a target hosting cell able to accept said frozen call.

Others features, details and advantages will become more apparent from the detailed illustrating description given hereafter with respect to the drawings on which:
- figure 1 and 2 respectively illustrate a first and a second decision making algorithms,
- figure 3-6 are flowcharts of the exchanges between a mobile terminal, a source cell, a target cell and the core cellular network during some operations:

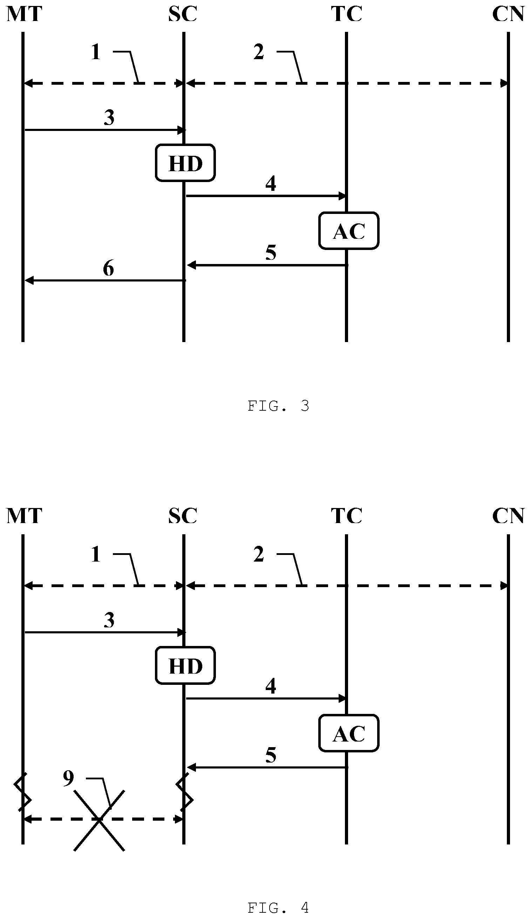

- figure 3 illustrates a handover preparation ended by an acceptation,
- figure 4 illustrates a handover preparation ended by a rejection,

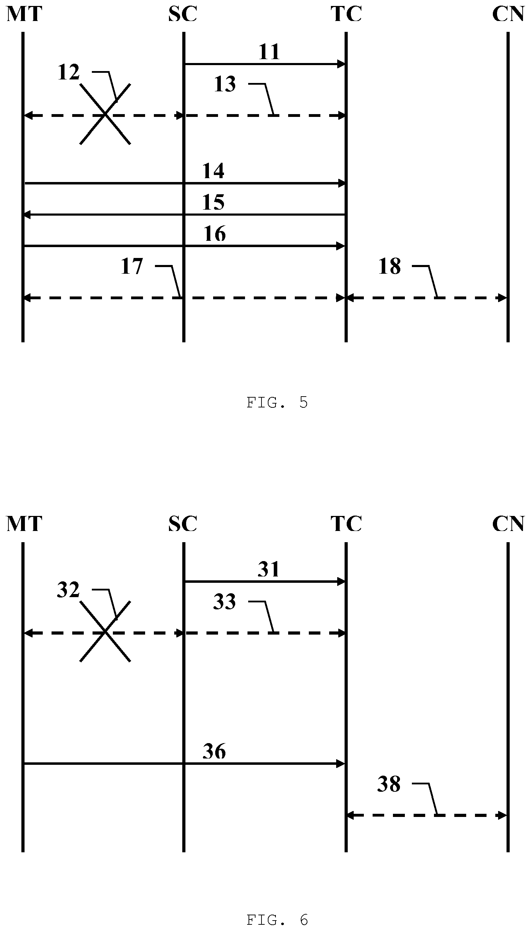

- figure 5 illustrates a handover execution in case of an acceptation in normal mode,
- figure 6 illustrates a handover execution in case of an acceptation in silent mode.

An object of the present disclosure is to avoid call drop. Let us consider a mobile terminal MT is handling an on-going call. To do so, said mobile terminal MT must be attached to a hosting cell. Said initial hosting cell is called a source cell.

As is known in the art, among other functions, a mobile terminal MT in a cellular network regularly monitors the strength level of a radio signal received from its hosting source cell SC, as an indicator of the quality of the radio link.

When said quality goes below a first high sensitivity threshold, some conservative measures, such as handover, are attempted in order to carry on the on-going call with another new cell, potentially offering a better quality radio link. Said new cell is called a target cell TC.

If, for any reason, no successful handover can be achieved, either because no target cell TC can be found in the vicinity or none of the found target cells TC is able to accept the proposed handover, the mobile terminal MT and its on-going call remain attached to the source cell SC.

According to prior art, when the quality of the radio link further goes bellow a second low sensitivity threshold, corresponding to a minimum acceptable quality to exchange signals between a hosting cell and a mobile terminal MT, lower than said first high sensitivity threshold, the mobile terminal MT drops said call.

According to a proposed embodiment, to avoid such a call drop and all its accompanying drawbacks, such as information losses and necessary re-establishment of the call, it is proposed to add to a mobile terminal MT a freezing means. Such a freezing means is able, when an on-going call is about to be dropped, to put said on-going call in frozen mode. Said frozen mode of the call (or of the mobile terminal MT) consists in freezing said on-going call by suspending the data traffic of said on-going call, instead of having said on-going call dropped.

By doing so, an on-going call is not dropped when the radio link quality goes bellow said second low sensitivity threshold. Instead, said call is placed into a frozen mode. From this frozen mode it can exit toward a normal mode when the radio link quality reverts back to a satisfactory level, that is, a level greater than said second low sensitivity threshold.

According to prior art, a call can only be in a normal mode or in dropped mode/rejected. According to the present teaching, a new additional mode, named frozen mode, is advantageously added. Said frozen mode allows for not immediately dropping a call, but instead place it in a wait mode/hold state, in order to provide some time to revert back to satisfactory conditions allowing to carry on with the call.

According to the present teaching, a call can be placed into said frozen mode another when said call is about to be dropped.

As in prior art, an "about to be dropped" condition can be determined by a quality of the wireless communication going under a given threshold.

According to the present teaching, an "about to be dropped" condition can also be determined in a predictive way, e.g. by a predictive estimation of the location of the mobile terminal. Such a location can e.g. be compared to a coverage map. For instance, if a mobile terminal location is estimated to be soon entering an coverage hole, such as an area without any cell or an area where the radio signals cannot propagate, the "about to be dropped" condition can be determined before the quality of the wireless communication goes under a given threshold. This may allow some more time to manage the on-going call and the conservative measures.

In said predictive configuration, the predictive estimation of the location of the mobile terminal may advantageously further be used to determine when and where sad mobile terminal will exit said coverage hole. This may advantageously help to better manage the transition to frozen mode and from the frozen. In such a case, the available cell(s) in the range of the mobile terminal when it exits from said coverage hole is so known and can be configured in advance, so as to be ready for the mobile terminal where and when it exits the coverage hole.

Once a call has been so placed in frozen mode as a conservative measure, some recovery measures must be taken. One such recovery measure consists in scanning the radio range for a target hosting cell TC able to accept said frozen call, through a satisfactory handover. This is advantageously done by a so called scanning means able to do such a scan. Said scanning means is advantageously activated at least when a call is placed in frozen mode. Alternately it can be activated before such an event, or even permanently, in order to be ready before the need occurs.

Another complementary conservative means, helping in avoiding call drop, takes place on the cell side. The aim of said means is to provide support to a mobile terminal MT even if this support is incomplete, i.e. limited to signalling traffic.

In the course of the present disclosure, two types of traffics, exchanged between a cell and a mobile terminal, are considered separately: one is data traffic and the other is signalling traffic. Data traffic comprises the useful data effectively exchanged in a communication, that is voice, data, etc. Signalling traffic comprises all the signalling messages exchanged between a mobile terminal and a cell to be able to control a communication. Said signalling messages comprises command to configure, establish, maintain a given communication.

Data traffic is characterised by a relatively more important amount of necessary resources, called data traffic resources. Instead signalling traffic is characterised by a less important amount of necessary resources, called signalling traffic resources. Due to said relative difference of amount, it may be possible to restrain a call to signalling traffic, when signalling traffic resources are available, while the lack of data traffic resources precludes from exchanging data traffic.

To do that, a cell, in a cellular communication network, comprises, as in prior art, an admission means AC, but said admission means AC has, according to the present, some extended functions. Said admission means AC is in charge of processing incoming calls requesting to be hosted by said cell.

When an incoming call requests to be hosted, an admission means AC is able to make a decision by selecting among several decisions.

A first decision is to accept said incoming call in normal mode NM. When an incoming call is accepted in normal mode NM, said call is then serviced normally. That is, all signalling and data aspects of said incoming call are served by the hosting cell. This means that said cell must have, at least, enough data traffic and enough signalling traffic resources to handle said incoming call.

Another decision is to reject RE said incoming call. In this case the request of the call to be hosted by said cell ends.

According to prior art, when an incoming call requests to be hosted, an admission means AC is only able to choose between accepting said call in normal mode NM or rejecting it RE. Consequently, if it is not possible to accept said incoming call in normal mode NM, e.g. because said cell has not enough data traffic resources to handle said incoming call, said admission means AC has no other choice than to reject RE said call.

According to an embodiment, an admission means AC provides another choice. Said admission means AC is further able to accept said incoming call in silent mode SM. In such silent mode SM, the cell services all signalling aspects of said incoming call, but only said signalling aspects. No data traffic aspects are serviced, and any data traffic of said incoming call is suspended, in both downward and upward directions.

Such a silent mode SM may be selected for a call even when said cell has not enough data traffic resources to handle said incoming call. Such a selection however needs the cell to have enough signalling traffic resources to handle said incoming call.

Said silent mode SM is advantageous in that it keeps a link between the core cellular network CN and said incoming call, despites not servicing it wholly, instead of simply rejecting it.

It has to be noted that it is not necessarily prejudicial to place a call in such a silent mode SM. If the call is a phone call, a silent mode SM has quite no chance to remain undetected, albeit said silent mode SM only lasts a very short time. However, a blank in a phone conversation will always be shorter than a call drop, added to the time necessary to be aware of the call drop, added to the time to establish a new call. If the call is a data call, the call usage of the data traffic may be discontinuous or asynchronous. If e.g. a user is browsing web pages, a short duration while no data traffic is available may remain undetected, as long as no interaction takes place during a blank. Even when an interaction occurs during a blank the lack of immediate response may be considered by the user as being part of a bad response time, as may sometimes be experienced.

This offers a third alternate decision for the admission means AC to select among.

If a cell has enough data traffic resources to handle an incoming call, said incoming call will be accepted in normal mode NM. If a cell has not enough signalling traffic resources to handle an incoming call, said incoming call will be rejected RE. In between these two extreme cases, the decision between rejecting RE said incoming call or accepting said incoming call in silent mode SM may be made upon one or more indicators chosen among several indicators.

A decision making heuristic may be built based on indicators related to said cell, to the neighbour cells of said cell or to other general parameters.

Among the indicators for said cell, one can find an indicator of the availability of signalling traffic resources. In case this indicator is negative, a rejection RE is to be expected.

Another indicator for said cell may be an expected time until data traffic resources are available. Depending on how long this time is, it may be considered to accept or not a call in silent mode SM, said silent mode SM acting here as a way to wait until said data traffic resources are available again.

Among the possible indicators for each neighbour cell of said cell, one can find the same indicators: signalling traffic resources availability and expected time until enough data traffic resources are available. Another indicator for a neighbour cell can be likelihood to accept an incoming call. Said likelihood may e.g. be expressed by a load level of said neighbour cell or by an availability of data traffic resources. In such a case, said cell may e.g. consider an acceptation in silent mode SM when at least one of its neighbour cells is able to immediately accept or is likely to be able to accept said incoming call soon.

Means to determine said indicators, and/or to transmit to said cell may be any known means. They are at least out of the scope of the present disclosure.

One indicator that may be useful, among general parameters, may be an estimated time T for the mobile terminal MT handling said incoming call, to cross said cell. The way to determine such an estimated time T may be e.g. either based on a physical model such as a model using the speed of said mobile terminal MT or based on statistical model tracking said time T as a function of e.g. the type of the mobile terminal MT or others parameters. By the way, said determination is out of the scope of the present disclosure.

As examples, two possible decision making algorithms are described.

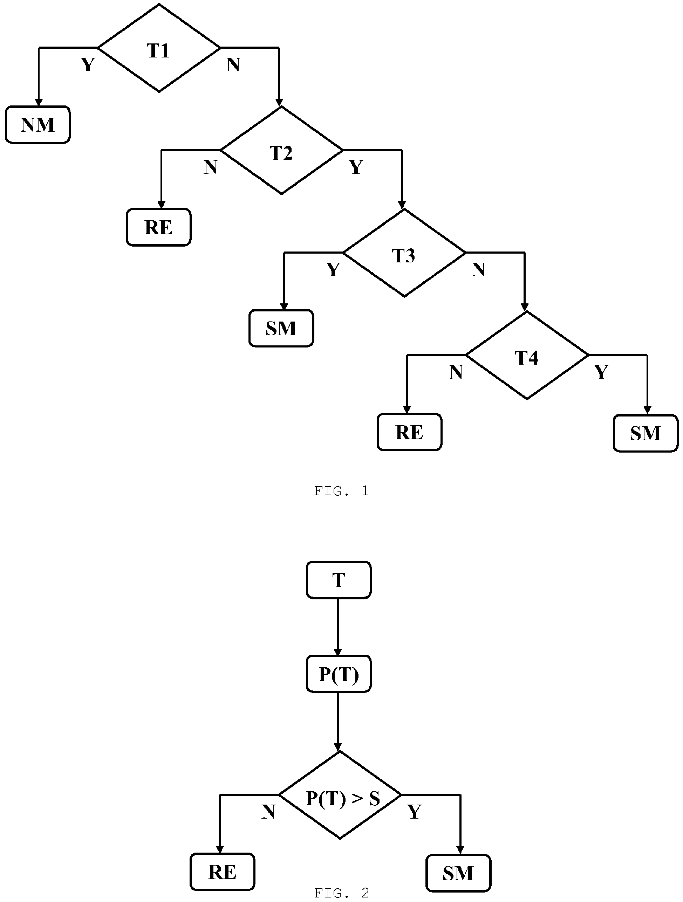

A first decision making algorithm is illustrated in figure 1. The algorithm figures here a serial of four tests. In the first test T1, availability of data traffic resources is checked. If data traffic resources are available, then, as in prior art, the algorithm goes on by accepting the call in normal mode NM.

If not, the decision is made between rejecting RE and accepting in silent mode SM. The algorithm proceeds to a second test T2. In the second test T2, availability of signalling traffic resources is checked. If signalling data traffic resources are not available, then the algorithm goes on by rejecting the call RE. If not, the algorithm proceeds to a third test T3. In the third test T3, availability of enough data and signalling traffic resources, at at least one neighbour cell of said cell, is checked. If available then the algorithm goes on by accepting the call in silent mode SM. If not available, the algorithm proceeds to a fourth test T4. In the fourth test T4, it is estimated if any neighbour cell of said cell will soon be able to accept said incoming call. The fourth test T4 compares two values. The first value is an expected time until enough data traffic resources are available at at least one neighbour cell of said cell. The second value is an estimated time T for the mobile terminal MT handling said incoming call to cross said cell. If the first value is lesser than the second value, for at least one neighbour cell, this indicates that at least one neighbour cell would be able to accept said incoming call when the mobile terminal MT would have crossed the current hosting cell. In that case said incoming call may advantageously be accepted in silent mode SM. Either, if the first value is greater than the second value, for all neighbour cells, this indicates that none of the neighbour cells would be able to accept said incoming call when the mobile terminal MT would have crossed the current hosting cell. In that case said incoming call may preferably be rejected RE.

A second decision making algorithm is illustrated in figure 2. Said second algorithm is based upon a probability function P. Said probability function P gives a probability to find a target hosting cell able to accept said incoming call in normal mode versus the estimated time T for the mobile terminal MT handling said incoming call to cross the current cell. The algorithm elaborates a value T of said estimated time. Then the algorithm elaborates, as a function of said estimated time T, a value P(T) of said probability. Said probability P(T) is then compared to a given threshold S. If said probability P(T) is greater than said threshold S, then the incoming call may be accepted in silent mode SM. Either, if the probability is too low, the incoming call may better be rejected RE.

Said probability function may be elaborated by any known method. By the way, said elaboration is out of the scope of the present disclosure.

A change of hosting cell, between a source cell and a target cell, also named a handover, consists in exchange of messages between, a mobile terminal MT, a source cell SC, a target cell TC and the core CN of the cellular network. Such a handover and its amendments according to the present teaching are illustrated in figures 3-6, depending on the different possible modes. Plain arrows indicate signalling traffic messages, while dotted arrows indicate data traffic.

Figure 3 illustrates a handover preparation. Before any handover, a mobile terminal MT is supposed to be attached to a source cell SC. Data traffic is then bi-directionally exchanged between mobile terminal MT and said source cell SC through link 1. Said data traffic is bi-directionally relayed between source cell SC and the core cellular network CN through link 2.

Regularly, a mobile terminal MT measures a radio link level and transmits 3 said measurement to its hosting source cell SC.

In said source cell SC, a handover decision module HD compares said radio link level to a threshold. Under a first level threshold, said handover decision module HD decides to start a handover.

Alternately, said handover decision module HD may, by any predictive way, anticipates that the mobile terminal MT is about to enter into a coverage hole. Before said entering, the handover decision module HD may decide to start a handover.

Said handover decision module HD starts a handover by sending a handover request 4 to a candidate target cell TC.

Said handover request 4 is received by said target cell TC and examined e.g. by an admission control module AC. At this step, the admission control module AC opts for one of the three possible choices: acceptation in normal mode NM, acceptation in silent mode SM, rejection RE.

Then the admission control module AC responds to the source cell SC by a handover request acknowledgement 5, containing the selected mode.

If said selected mode is an acceptation, either in normal mode NM or in silent mode SM, the source cell SC sends a handover command message 6 to the mobile terminal MT. This ends the handover preparation.

Either, if said selected mode is a rejection RE, as illustrated in figure 4, no handover command message 6 is sent to the mobile terminal MT. This also ends the handover preparation, and the handover itself with a fail. The mobile terminal MT then remains attached to the source cell SC.

The mobile terminal MT may then attempt another handover with another target cell TC or later. If no successful handover can be realized with an accepting target cell TC, the quality of the radio link between the mobile terminal MT and the source cell SC may deteriorate until the mobile terminal MT must drop the call, as indicated by the cut cross 9.

A handover process goes on, in case of acceptation in normal mode NM, as illustrated in figure 5 and in case of acceptation in silent mode SM, as illustrated in figure 6.

With reference to figure 5, is illustrated the execution of a handover in case of an acceptation in normal mode NM. Said execution is similar to the execution according to prior art. The handover execution is started by the source cell SC sending a status 11 of the mobile terminal MT to the candidate target cell TC. Then the data traffic exchanges between the source cell SC and the mobile terminal MT are stopped, as indicated by the cut cross 12. Instead data traffic received by the source cell SC to the attention of mobile terminal MT is instead redirected 13 toward the target cell TC. In parallel, the mobile terminal MT establishes contact with the target cell TC. First the mobile terminal MT sends a synchronisation message 14 to the target cell TC. The target cell TC, since it accepts the call in normal mode NM, answers to the mobile terminal MT with an allocating and timing advance message 15. Said message is acknowledged by the mobile terminal MT sending a handover confirm message 16. At this point the handover is complete. The data traffic is then bi-directionally exchanged between mobile terminal MT and said target cell TC through link 17. Said data traffic is relayed between target cell TC and the core cellular network CN through link 18.

With reference to figure 6, is illustrated the execution of a handover in case of an acceptation in silent mode SM. Said execution is quite similar to the execution in case of an acceptation in normal mode NM. It is however simplified due to the absence of data traffic. The handover execution is started by the source cell SC sending a status 31 of the mobile terminal MT to the candidate target cell TC. Then the data exchanges between the source cell SC and the mobile terminal MT are stopped, as indicated by the cut cross 32. Instead data traffic received by the source cell SC to the attention of mobile terminal MT is instead redirected 33 toward the target cell TC. In order not to lose any data traffic, said redirected data traffic is advantageously buffered until a new acceptation in normal mode NM can be obtained. In parallel, the mobile terminal MT establishes contact with the target cell TC. The target cell TC, since it accepts in silent mode SM, without any data traffic, does not need to synchronise with the mobile terminal MT. There is no equivalent of messages 14, 15 of figure 4. The mobile terminal MT only sends a handover confirm message 36 to the target cell TC. At this point the handover is complete. There is no data traffic exchanged between mobile terminal MT and said target cell TC. Exchanges between the mobile terminal MT and the target cell TC are limited to signalling traffic only, thus needing much lesser resources.

Once a call has been placed in frozen mode as a conservative measure, some recovery measures must be taken. One such recovery measure consists in scanning the radio range for a target hosting cell TC able to accept said frozen call. This is advantageously done, as previously described, by a scanning means able to do such a scan. During such a scan a scanning means searches for candidate target cells TC that are able to accept said frozen call either in normal mode NM or at least in silent mode SM. By doing so, if a handover toward a target cell TC accepting in normal mode NM is most of the times preferred, a handover toward a target cell TC only accepting in silent mode SM appears to be better than no handover.

The mobile terminal MT then advantageously further comprises a resuming means able to resume the call from frozen mode into normal mode.

It can be noted that there are two normal modes, one for a call/mobile terminal and one for a cell. A call or a mobile terminal MT can be in normal mode, in frozen mode or dropped. A cell can be accepting in normal mode, accepting in silent mode or rejecting.

A condition to apply such a resume action is first to find a target hosting cell TC able to accept said call in normal mode NM. To do so, said target cell TC must have enough data traffic and signalling traffic resources available at resuming time.

It can be the current hosting cell that frees some resources and provides again enough resources to allow the mobile terminal MT to resume to normal mode. Alternately, it can be a new target cell TC, discovered in the neighbourhood, which is able to accept the call in normal mode NM. In such a case the resume action is applied during or after a handover toward said target cell TC.

The current teaching further concerns a method, in a cellular communication network, for avoiding a call drop. Said method advantageously uses a mobile terminal MT and/or a cell, modified as previously described.

Said method comprises the following steps. As a first step, when an on-going call is about to be dropped, said on-going call is put in frozen mode, instead of dropping said call. In said frozen mode, the data traffic of said on-going call is suspended. This advantageously provides some time, to allow, mainly the mobile terminal MT, to find another solution. Depending on the available signalling traffic resources, the signalling traffic is, as far as possible, maintained.

As previously described, an "about to be dropped" condition may be determined either by a quality of the wireless communication going under a given threshold or by a predictive estimation of the location of the mobile terminal with respect a coverage hole.

At least from the instant when an on-going call has been put in frozen mode, another step of the method consists in scanning the radio field in search for a target hosting cell TC able to accept said now frozen call either in normal mode NM or in silent mode SM. During said step the mobile terminal MT scans the neighbour cells in range in order to find a new accepting target cell TC able to support said call.

Said scanning step may advantageously be helped by a predictive method able to predict which target cell(s) will be available and when.

A new target cell TC having enough data traffic resources and so able to accept the call in normal mode NM is preferred. If such a target cell TC can be found, a handover is applied toward said target cell TC, and a resume step may also be applied to resume said call to normal mode with said target cell TC as a support hosting cell.

Either if a target cell TC has not enough data traffic resources but has enough signalling traffic resources to handle said incoming call, at least with respect to the signalling aspects of said call, said call may be accepted in silent mode SM. By doing so, said target cell TC provides support to the call, at least as a temporary measure, while waiting for a target cell TC able to accept said call in normal mode NM. In this case of said call accepted in silent mode SM, the call is kept into frozen mode, since it cannot be resumed. In such a case, the scanning is carried on in search of a target hosting cell TC able to accept said frozen call.

## Claims

1. A cell -TC-, in a cellular communication network, comprising an admission means -AC- adapted to process an incoming call requesting to be hosted by the cell -TC-, wherein the admission means -AC- comprises:
- means for accepting said incoming call in normal mode -NM-, wherein said means for accepting said incoming call in normal mode -NM- is adapted to service all signalling and data aspects of said incoming call, when said cell -TC)- has enough data traffic resources to handle said incoming call,
- means for rejecting -RE- said incoming call, when said cell -TC- has not enough signalling traffic resources and data traffic resources to handle said incoming call,
***characterized in that*** said admission means -AC- further comprises:
- means for accepting said incoming call in silent mode -SM-, wherein said means for accepting said incoming call in silent mode -SM- is adapted to service all signalling aspects of said incoming call while suspending data traffic of said incoming call, when said cell -TC- has enough signalling traffic resources but not enough data traffic resources to handle said incoming call.

2. The cell -TC- of claim 1, wherein the admission means -AC- is adapted to make a decision between rejecting -RE-said incoming call or accepting said incoming call in silent mode -SM- upon indicators among:
for said cell -TC-:
- expected time until enough data traffic resources are available,
for each neighbour cell of said cell -TC-:
- signalling traffic resources availability,
- expected time until enough data traffic resources are available,
- likelihood to accept an incoming call,
and/or:
- estimated time -T-, for the mobile terminal -MT- handling said incoming call, to cross said cell -TC-.

3. The cell -TC- of claim **2,** wherein the admission means - AC- is adapted to make said decision upon the following tests (T2, T3, T4): if enough signalling traffic resources are available at said cell -TC-, and enough data and signalling traffic resources are available at at least one neighbour cell of said cell -TC-, or if enough signalling traffic resources are available at said cell -TC-, and not enough data traffic resources are available at any neighbour cell of said cell -TC- and said expected time until enough data traffic resources are available at at least one neighbour cell of said cell -TC- is lesser than said estimated time -T-, for the mobile terminal handling said incoming call, to cross said cell -TC-, and enough signalling traffic resources are available at said at least one neighbour cell of said cell -TC-, said incoming call is accepted in silent mode -SM- by said cell -TC-, else said incoming call is rejected -RE-.

4. The cell -TC- of claim **2,** wherein the admission means -AC- is adapted to make said decision upon a comparison between a probability -P- to find a target hosting cell -TC- able to accept said incoming call in normal mode -NM-as a function of estimated time -T-, for the mobile terminal -MT- handling said incoming call, to cross current cell, and a given threshold -S-.

5. A mobile terminal -MT-, in a cellular communication network, ***characterized in that*** it comprises:
- a freezing means able, when an on-going call is about to be dropped, to put said on-going call in frozen mode: freezing said on-going call by suspending the data traffic of said on-going call, instead of having said on-going call dropped, and
- a scanning means able, when the on-going call is in frozen mode, to scan for a target hosting cell -TC- able to accept said frozen call either in normal mode -NM- or in silent mode -SM-, wherein silent mode -SM- is adapted to service all signalling aspects of said on-going call while suspending data traffic of said on-going call, when said target hosting cell -TC- has enough signalling traffic resources but not enough data traffic resources to handle said on-going call.

6. The mobile terminal -MT- of claim **5,** wherein an "about to be dropped" condition is determined by a quality of the on-going call going under a given threshold.

7. The mobile terminal -MT- of claim **5,** wherein an "about to be dropped" condition is determined by a predictive estimation of the location of the mobile terminal -MT-.

8. The mobile terminal -MT- of any one of claims **5** to **7,** further comprising a resuming means able, when a target hosting cell -TC- has been found that is able to accept said on-going call in normal mode -NM-, to resume the on-going call from frozen mode into normal mode -NM-.

9. A method, in a cellular communication network for avoiding an on-going call drop ***characterized in that*** it comprises the following steps:
- when an on-going call is about to be dropped, putting said on-going call in frozen mode, where said on-going call is frozen by having its data traffic suspended, instead of being dropped, and
- once the on-going call has been put in frozen mode, scanning for a target hosting cell -TC- able to accept said frozen on-going call either in normal mode -NM- or in silent mode -SM-, wherein silent mode -SM- is adapted to service all signalling aspects of said on-going call while suspending data traffic of said on-going call, when said target hosting cell -TC-has enough signalling traffic resources but not enough data traffic resources to handle said incoming call.

10. The method of claim **9,** wherein an "about to be dropped" condition is determined by a quality of the on-going call going under a given threshold.

11. The method of claim **9,** wherein an "about to be dropped" condition is determined by a predictive estimation of the location of a mobile terminal handling the on-going call.

12. The method of any one of claims **9** to **11,** further comprising the steps of: accepting said call in normal mode -NM-, if said target hosting cell -TC- has enough data traffic resources to handle said on-going call, and resuming said on-going call from frozen mode into normal mode -NM-.

13. The method of any one of claims **9** to **11,** further comprising the steps of: accepting said on-going call in silent mode -SM-, if said target hosting cell -TC- has not enough data traffic resources but has enough signalling traffic resources to handle said on-going call, keeping said on-going call into frozen mode, and carrying on scanning for a target hosting cell -TC- able to accept said frozen on-going call in normal mode -NM-.

## Patentansprüche

1. Zelle TC in einem Kommunikationsnetzwerk, umfassend ein Zulassungsmittel AC, das so ausgelegt ist, dass es einen eingehenden Ruf verarbeitet, der anfordert, durch die Zelle TC gehostet zu werden, wobei das Zulassungsmittel AC umfasst:
- Mittel zum Annehmen des eingehenden Rufs in einem Normalmodus, NM, wobei das Mittel zum Annehmen des eingehenden Rufs im Normalmodus, NM, so ausgelegt ist, dass es alle Signalisierungs- und Datenaspekte des eingehenden Rufs bedient, wenn die Zelle TC genügend Datenverkehrsressourcen zum Abwickeln des eingehenden Rufs aufweist,
- Mittel zum Zurückweisen RE des eingehenden Rufs, wenn die Zelle TC nicht genügend Signalisierungsverkehrsressourcen und Datenverkehrsressourcen zum Abwickeln des eingehenden Rufs aufweist,
**dadurch gekennzeichnet, dass** das Zulassungsmittel AC ferner umfasst:
- Mittel zum Annehmen des eingehenden Rufs in einem Hintergrundmodus, SM, wobei das Mittel zum Annehmen des eingehenden Rufs im Hintergrundmodus, SM, so ausgelegt ist, dass es alle Signalisierungsaspekte des eingehenden Rufs bedient, während es Datenverkehr des eingehenden Rufs vorübergehend einstellt, wenn die Zelle TC genügend Signalisierungsverkehrsressourcen, aber nicht genügend Datenverkehrsressourcen zum Abwickeln des eingehenden Rufs aufweist.

2. Zelle TC nach Anspruch 1, wobei das Zulassungsmittel AC so ausgelegt ist, dass es bei folgenden Indikatoren eine Entscheidung zwischen Zurückweisen RE des eingehenden Rufs oder Annehmen des eingehenden Rufs im Hintergrundmodus, SM, trifft:
für die Zelle TC:
- voraussichtliche Zeit, bis genügend Datenverkehrsressourcen verfügbar sind,
für jede Nachbarzelle der Zelle TC:
- Verfügbarkeit von Signalisierungsverkehrsressourcen,
- voraussichtliche Zeit, bis genügend Datenverkehrsressourcen verfügbar sind,
- Wahrscheinlichkeit der Annahme eines eingehenden Rufs,
und/oder:
- geschätzte Zeit T zum Durchqueren der Zelle TC für das mobile Endgerät, MT, das den eingehenden Ruf abwickelt.

3. Zelle TC nach Anspruch 2, wobei das Zulassungsmittel AC so ausgelegt ist, dass es die Entscheidung nach den folgenden Tests (T2, T3, T4) trifft: wenn genügend Signalisierungsverkehrsressourcen an der Zelle TC verfügbar sind und genügend Daten- und Signalisierungsverkehrsdaten an mindestens einer Nachbarzelle der Zelle TC verfügbar sind, oder wenn genügend Signalisierungsverkehrsressourcen an der Zelle TC verfügbar sind und an keiner Nachbarzelle der Zelle TC genügend Datenverkehrsressourcen verfügbar sind, und die voraussichtliche Zeit, bis genügend Datenverkehrsressourcen an der mindestens einen Nachbarzelle der Zelle TC verfügbar sind, kürzer als die geschätzte Zeit T zum Durchqueren der Zelle TC für das mobile Endgerät ist, das den Ruf abwickelt, und genügend Signalisierungsverkehrsressourcen an der mindestens einen Nachbarzelle der Zelle TC verfügbar sind, wird der eingehende Ruf durch die Zelle TC im Hintergrundmodus, SM, angenommen, andernfalls wird der eingehende Ruf zurückgewiesen RE.

4. Zelle TC nach Anspruch 2, wobei das Zulassungsmittel AC so ausgelegt ist, dass es die Entscheidung nach einem Vergleich zwischen einer Wahrscheinlichkeit P, dass eine Zielhostzelle TC, die zum Annehmen des eingehenden Rufs im Normalmodus, NM, in der Lage ist, in Abhängigkeit von der geschätzten Zeit T zum Durchqueren der aktuellen Zelle für das mobile Endgerät, MT, gefunden wird, und einer gegebenen Schwelle S trifft.

5. Mobiles Endgerät, MT, in einem zellularen Kommunikationsnetzwerk, das **dadurch gekennzeichnet ist, dass** es umfasst:
- ein Einfriermittel, das, wenn ein bestehender Ruf im Begriff ist, abgebrochen zu werden, in der Lage ist, den bestehenden Ruf in einen Einfriermodus zu versetzen: Einfrieren des bestehenden Rufs durch vorübergehendes Einstellen des Datenverkehrs des bestehenden Rufs, statt den bestehenden Ruf abzubrechen; und
- ein Suchmittel, das, wenn der bestehende Ruf im eingefrorenen Modus ist, in der Lage ist, nach einer Zielhostzelle TC zu suchen, die in der Lage ist, den eingefrorenen Ruf entweder in einem Normalmodus, NM, oder in einem Hintergrundmodus, SM, anzunehmen, wobei der Hintergrundmodus, SM, so ausgelegt ist, dass er alle Signalisierungsaspekte des bestehenden Rufs bedient, während er Datenverkehr des bestehenden Rufs vorübergehend einstellt, wenn die Zielhostzelle TC genügend Signalverkehrsressourcen, aber nicht genügend Datenverkehrsressourcen zum Abwickeln des bestehenden Rufs aufweist.

6. Mobiles Endgerät, MT, nach Anspruch 5, wobei ein Zustand des "im Begriff sein, abgebrochen zu werden" durch eine Qualität des bestehenden Rufs bestimmt wird, die unter eine gegebene Schwelle fällt.

7. Mobiles Endgerät, MT nach Anspruch 5, wobei ein Zustand des "im Begriff sein, abgebrochen zu werden" durch eine prädiktive Schätzung des Standorts des mobilen Endgeräts, MT, bestimmt wird.

8. Mobiles Endgerät, MT, nach einem der Ansprüche 5 bis 7, ferner umfassend ein Fortsetzungsmittel, das, wenn eine Zielhostzelle TC gefunden wurde, die zum Annehmen des bestehenden Rufs im Normalmodus, NM, in der Lage ist, zum Fortsetzen des bestehenden Rufs aus dem eingefrorenen Zustand im Normalmodus, NM, in der Lage ist.

9. Verfahren in einem zellularen Kommunikationsnetzwerk zur Vermeidung des Abbruchs eines bestehenden Rufs, **dadurch gekennzeichnet, dass** es die folgenden Schritte umfasst:
- Versetzen, wenn ein bestehender Ruf im Begriff ist, abgebrochen zu werden, des bestehenden Rufs in einen eingefrorenen Modus, wobei der bestehende Ruf dadurch eingefroren wird, dass sein Datenverkehr vorübergehend eingestellt wird, statt dass er abgebrochen wird, und
- Suchen, sobald der bestehende Ruf in den eingefrorenen Modus versetzt wurde, nach einer Zielhostzelle TC, die in der Lage ist, den eingefrorenen bestehenden Ruf entweder in einem Normalmodus, NM, oder in einem Hintergrundmodus, SM, anzunehmen, wobei der Hintergrundmodus, SM, so ausgelegt ist, dass er alle Signalisierungsaspekte des bestehenden Rufs bedient, während er Datenverkehr des bestehenden Rufs vorübergehend einstellt, wenn die Zielhostzelle TC genügend Signalverkehrsressourcen, aber nicht genügend Datenverkehrsressourcen zum Abwickeln des eingehenden Rufs aufweist.

10. Verfahren nach Anspruch 9, wobei ein Zustand des "im Begriff sein, abgebrochen zu werden" durch eine Qualität des bestehenden Rufs bestimmt wird, die unter eine gegebene Schwelle fällt.

11. Verfahren nach Anspruch 9, wobei ein Zustand des "im Begriff sein, abgebrochen zu werden" durch eine prädiktive Schätzung des Standorts eines mobilen Endgeräts bestimmt wird, das den bestehenden Ruf abwickelt.

12. Verfahren nach einem der Ansprüche 9 bis 11, ferner umfassend die folgenden Schritte: Annehmen des Rufs im Normalmodus, NM, wenn die Zielhostzelle TC genügend Datenverkehrsressourcen zum Abwickeln des bestehenden Rufs aufweist und Fortsetzen des bestehenden Rufs aus dem eingefrorenen Modus im Normalmodus, NM.

13. Verfahren nach einem der Ansprüche 9 bis 11, ferner umfassend die folgenden Schritte: Annehmen des bestehenden Rufs im Hintergrundmodus, SM, wenn die Zielhostzelle TC nicht genügend Datenverkehrsressourcen, aber genügend Signalisierungsverkehrsressourcen zum Abwickeln des bestehenden Rufs aufweist, Halten des bestehenden Rufs im eingefrorenen Modus und Durchführen einer Suche nach einer Zielhostzelle TC, die zum Annehmen des eingefrorenen bestehenden Rufs im Normalmodus, NM, in der Lage ist.

## Revendications

1. Cellule (TC), dans un réseau de communication cellulaire, comprenant un moyen d'admission (AC) conçu pour traiter un appel entrant demandant d'être hébergé par la cellule (TC), dans laquelle le moyen d'admission (AC) comprend :
- un moyen pour accepter ledit appel entrant dans un mode normal (NM), dans laquelle ledit moyen pour accepter ledit appel entrant dans un mode normal (NM) est conçu pour couvrir tous les aspects de signalisation et de données dudit appel entrant lorsque ladite cellule (TC) possède suffisamment de ressources de trafic de données pour traiter ledit appel entrant,
- un moyen pour rejeter (RE) ledit appel entrant lorsque ladite cellule (TC) ne possède pas suffisamment de ressources de trafic de signalisation et de ressources de trafic de données pour traiter ledit appel entrant, ***caractérisée en ce que*** ledit moyen d'admission (AC) comprend en outre :
- un moyen pour accepter ledit appel entrant en mode silencieux (SM), dans laquelle ledit moyen pour accepter ledit appel entrant en mode silencieux (SM) est conçu pour couvrir tous les aspects de signalisation dudit appel entrant tout en suspendant un trafic de données dudit appel entrant lorsque ladite cellule (TC) possède suffisamment de ressources de trafic de signalisation mais pas suffisamment de ressources de trafic de données pour traiter ledit appel entrant.

2. Cellule (TC) selon la revendication 1, dans laquelle le moyen d'admission (AC) est conçu pour prendre une décision entre le rejet (RE) dudit appel entrant ou l'acceptation dudit appel entrant en mode silencieux (SM) selon des indicateurs parmi :
pour ladite cellule (TC) :
- le temps prévu jusqu'à ce que suffisamment de ressources de trafic de données soient disponibles, pour chaque cellule voisine de ladite cellule (TC) :
- la disponibilité de ressources de trafic de signalisation,
- le temps prévu jusqu'à ce que suffisamment de ressources de trafic de données soient disponibles,
- la probabilité d'accepter un appel entrant,
et/ou :
- le temps estimé (T) pour que le terminal mobile (MT) traitant ledit appel entrant croise ladite cellule (TC).

3. Cellule (TC) selon la revendication 2, dans laquelle le moyen d'admission (AC) est conçu pour rendre ladite décision lors des tests suivants (T2, T3, T4) : si suffisamment de ressources de trafic de signalisation sont disponibles au niveau de ladite cellule (TC) et si suffisamment de ressources de trafic de signalisation et de données sont disponibles au niveau d'au moins une cellule voisine de ladite cellule (TC) ou si suffisamment de ressources de trafic de signalisation sont disponibles au niveau de ladite cellule (TC) et s'il n'y a pas suffisamment de ressources de trafic de données qui sont disponibles au niveau de n'importe quelle cellule voisine de ladite cellule (TC) et si ledit temps prévu jusqu'à ce que suffisamment de ressources de trafic de données soient disponibles au niveau d'au moins une cellule voisine de ladite cellule (TC) est inférieur au dit temps estimé (T) pour que le terminal mobile traitant ledit appel entrant croise ladite cellule (TC) et si suffisamment de ressources de trafic de signalisation sont disponibles au niveau de ladite ou desdites cellules voisines de ladite cellule (TC), ledit appel entrant est accepté en mode silencieux (SM) par ladite cellule (TC) ; autrement, ledit appel entrant est rejeté (RE).

4. Cellule (TC) selon la revendication 2, dans laquelle le moyen d'admission (AC) est conçu pour prendre ladite décision lors d'une comparaison entre une probabilité (P) pour trouver une cellule d'hébergement cible (TC) capable d'accepter ledit appel entrant en mode normal (NM) en fonction du temps estimé (T) pour que le terminal mobile (MT) traitant ledit appel entrant croise une cellule actuelle, et un seuil donné (S).

5. Terminal mobile (MT) dans un réseau de communication cellulaire, ***caractérisé en ce qu'***il comprend :
- un moyen de blocage capable, lorsqu'un appel en cours est sur le point d'être abandonné, de mettre ledit appel en cours en mode bloqué : le blocage dudit appel en cours en suspendant les données de trafic dudit appel en cours au lieu d'avoir ledit appel en cours abandonné, et
- un moyen de balayage capable, lorsque l'appel en cours est en mode bloqué, de balayer une cellule d'hébergement cible (TC) capable d'accepter ledit appel bloqué soit en mode normal (NM), soit en mode silencieux (SM), dans lequel le mode silencieux (SM) est conçu pour couvrir tous les aspects de signalisation dudit appel en cours tout en suspendant un trafic de données dudit appel en cours lorsque ladite cellule d'hébergement cible (TC) possède suffisamment de ressources de trafic de signalisation mais pas suffisamment de ressources de trafic de données pour traiter ledit appel en cours.

6. Terminal mobile (MT) selon la revendication 5, dans lequel une condition « sur le point d'être abandonné » est déterminée par une qualité de l'appel en cours tombant en deçà d'un seuil donné.

7. Terminal mobile (MT) selon la revendication 5, dans lequel une condition « sur le point d'être abandonné » est déterminée par une estimation prédictive de l'emplacement du terminal mobile (MT).

8. Terminal mobile (MT) selon l'une quelconque des revendications 5 à 7, comprenant en outre un moyen de reprise capable, lorsqu'une cellule d'hébergement cible (TC) a été trouvée qui est capable d'accepter ledit appel en cours en mode normal (NM), de reprendre l'appel en cours en passant du mode bloqué au mode normal (NM).

9. Procédé, dans un réseau de communication cellulaire pour éviter un abandon d'appel en cours ***caractérisé en ce qu'***il comprend les étapes suivantes consistant :
- lorsqu'un appel en cours est sur le point d'être abandonné, à mettre ledit appel en cours en mode bloqué, où ledit appel en cours est bloqué en ayant son trafic de données suspendu, au lieu d'être abandonné, et
- une fois que l'appel en cours a été mis en mode bloqué, à balayer une cellule d'hébergement cible (TC) capable d'accepter ledit appel en cours bloqué soit en mode normal (NM), soit en mode silencieux (SM), dans lequel le mode silencieux (SM) est conçu pour couvrir tous les aspects de signalisation dudit appel en cours tout en suspendant le trafic de données dudit appel en cours lorsque ladite cellule d'hébergement cible (TC) possède suffisamment de ressources de trafic de signalisation mais pas suffisamment de ressources de trafic de données pour traiter ledit appel entrant.

10. Procédé selon la revendication 9, dans lequel une condition « sur le point d'être abandonné » est déterminée par une qualité de l'appel en cours tombant en deçà d'un seuil donné.

11. Procédé selon la revendication 9, dans lequel une condition « sur le point d'être abandonné » est déterminée par une estimation prédictive de l'emplacement d'un terminal mobile traitant l'appel en cours.

12. Procédé selon l'une quelconque des revendications 9 à 11, comprenant en outre les étapes consistant : à accepter ledit appel en mode normal (NM) si ladite cellule d'hébergement cible (TC) possède suffisamment de ressources de trafic de données pour traiter ledit appel en cours et à reprendre ledit appel en cours en passant du mode bloqué au mode normal (NM).

13. Procédé selon l'une quelconque des revendications 9 à 11, comprenant en outre les étapes consistant : à accepter ledit appel en cours en mode silencieux (SM) si ladite cellule d'hébergement cible (TC) ne possède pas suffisamment de ressources de trafic de données mais possède suffisamment de ressources de trafic de signalisation pour traiter ledit appel en cours, à garder ledit appel en cours en mode bloqué et à effectuer un balayage d'une cellule d'hébergement cible (TC) capable d'accepter ledit appel en cours bloqué en mode normal (NM) .
